# EUROPEAN PATENT APPLICATION

(11) **EP 2 923 929 A1**
(43) Date of publication of application: **30.09.2015**
(21) Application number: 15160762.9
(22) Date of filing: 25.03.2015
(51) Int. Cl.: B62K 3/00, B62K 5/08

(54) **Steering device of scooter and a scooter**

(30) Priority: 25.03.2014 CN 201420136154 U
(71) Applicant: Shanghai Magic Wheels Sporting Goods Co., Ltd., Shanghai 200032 (CN)
(72) Inventor: Wang, Xiuping, 200032 Shanghai (CN); Feng, Lei, 200032 Shanghai (CN)
(74) Representative: Stork Bamberger

(57) **Abstract**

The invention discloses a steering device of scooter and a scooter. The steering device of scooter comprises: a steering beam structure (31), a first wheel portion connector (32) and a second wheel portion connector (33), wherein the steering beam structure (31) comprises a load bearing portion, a first beam (312) and a second beam (315), the first beam (312) and the second beam (315) are located on two sides of the load bearing portion respectively and extend in a transverse direction that is perpendicular to a traveling direction of the scooter, the load bearing portion bears a steering force from the scooter, the first beam (312) has a first end (313), and the second beam (315) has a second end (316); the first end (313) forms a rotating pair with the first wheel portion connector (32), and the second end (316) forms a rotating pair with the second wheel portion connector (33), the first wheel portion connector (32) and the second wheel portion connector (33) are connected to be moved in association with each other, and the rotation of the first wheel portion connector (32) and the second wheel portion connector (33) enables the wheels of scooter that are fixed to individual wheel portion connectors 832, 33) to steer. The invention can realize a two-wheel torque force steering without fixing the rotating shaft at both sides up and down. Moreover, the steps of machining is simplified and reduced, production efficiency is improved, and overall visual effect is made more concise and aesthetically pleasing.

## Description

### FIELD OF THE INVENTION

The invention relates to a steering device of scooter.

The invention further relates to a scooter comprising the above steering device.

### BACKGROUND

Sport entertainment apparatus are being developed continuously. As a modern entertainment apparatus, the scooter has gradually entered individual families. The scooter can be either used as novel means of transportation, or as an entertainment apparatus, which therefore brings a lot of convenience and happiness to people's lives. Therefore, the scooter has become very popular among people, especially the youth.

The scooter generally comprises a three-wheel structure comprising two forwardly arranged steering wheels and one rearward arranged directional wheel. During sliding, a steering structure controls the two steering wheels to control direction. During steering, a deck is inclined so as to generate a steering torque which is transmitted through the steering structure, eventually realizing steering of front wheels. Existing steering structures are complicated in design and have numerous parts and components, thus making the steps of assembly troublesome and time-consuming. Moreover, if the force is not evenly applied during steering, the user may easily tip over during use.

Therefore, there is an urgent need for an improvement that overcomes the above problems in the prior art.

### SUMMARY OF THE INVENTION

The technical problem to be solved by the invention is to provide a steering device of scooter which not only achieves a two-wheel steering of scooter, but also is simple in structure and can be easily manipulated.

The steering device of scooter according to the invention comprises: a steering beam structure, a first wheel portion connector and a second wheel portion connector, wherein the steering beam structure comprises a load bearing portion, a first beam and a second beam, the first beam and the second beam are located on two sides of the load bearing portion respectively and extend in a transverse direction that is perpendicular to a traveling direction of the scooter, the load bearing portion bears a steering force from the scooter, the first beam has a first end, and the second beam has a second end; the first end forms a rotating pair with the first wheel portion connector, and the second end forms a rotating pair with the second wheel portion connector, the first wheel portion connector and the second wheel portion connector are connected to be moved in association with each other, and the rotation of the first wheel portion connector and the second wheel portion connector enables the wheels of scooter that are fixed to individual wheel portion connectors to steer.

Optionally, in the steering device of scooter, the load bearing portion comprises a base portion that is fixed to the deck of the scooter, and the base portion is further provided with a main lever main body structure for connecting with a handlebar of the scooter.

Optionally, in the steering device of scooter, each of the rotating pairs comprises a sleeve and a steering shaft that can be rotated relative to each other, wherein the sleeve is selectively provided at one of the wheel portion connector and an end of the beam that corresponds to the wheel portion connector, and the steering shaft is provided at the other one of the wheel portion connector and the end of the beam that corresponds to the wheel portion connector.

Optionally, in the steering device of scooter, each of the first wheel portion connector and the second wheel portion connector comprises a body for connecting with the wheel of the scooter and a connection portion for connecting with the rotating pair.

Optionally, in the steering device of scooter, the steering shaft is fixed to the connection portion, and the sleeve is fixed to the end of the beam, wherein steering shaft can rotate relatively in the sleeve.

Optionally, in the steering device of scooter, the body comprises a first surface that is substantially parallel to the ground, the connection portion comprises a second surface that is inclined relative to the first surface at an angle in a longitudinal direction, and the steering shaft projects outwardly from the second surface.

Optionally, in the steering device of scooter, the connection portion of the first wheel portion connector and the connection portion of the second wheel portion connector are connected through a spring-like lateral rod so that the first wheel portion connector and the second wheel portion connector can move in association with each other.

Optionally, in the steering device of scooter, the connection portion of the first wheel portion connector and the connection portion of the second wheel portion connector are connected through a lateral rod so that the first wheel portion connector and the second wheel portion connector can move in association with each other.

Optionally, in the steering device of scooter, the sleeve is provided with a projection, and the second surface is provided with a first boss and a second boss respectively, wherein when the steering shaft is rotated relative to the sleeve, the projection can move to the position of the second boss from the position of the first boss.

Optionally, in the steering device of scooter, a limiting groove in the second surface is formed between the first boss and the second boss.

Optionally, the steering device of scooter further comprises a steering shaft washer which is sleeved over an end of the steering shaft which is adjacent to the second surface, and the sleeve is sleeved over the steering shaft washer.

Optionally, in the steering device of scooter, the first beam and second beam extending in the transverse direction are inclined relative to the ground at an angle respectively.

Another technical problem to be solved by the invention is to provide a scooter in which a two-wheel steering can be easily achieved and which can be conveniently manufactured.

The scooter according to the invention comprises a handlebar, a deck, front wheels and a rear wheel, wherein a front end of the deck is connected to the front wheels via the above described steering device, a rear end of the deck is connected to the rear wheel, and the steering device is further connected to the handlebar.

The invention can realize a two-wheel torque force steering without fixing the rotating shaft at both sides up and down. Moreover, the manufacturing steps is simplified and reduced, which improved the production efficiency a lot, and overall visual effect is more concise and aesthetically pleasing. In addition, when the second surface of the connection portion is inclined relative to the first surface (horizontal plane) of the body at an angle, a flexible manipulation of steering can be facilitated.

Other aspects and features of the invention will become apparent from the detailed description with reference to the accompanying drawings. However, it is understood that the accompanying drawings are designed only for the purpose of explanation, rather than limiting the scope of the invention, since the scope of protection should be defined by appended claims. It should be also understood that the accompanying drawings merely intend to illustrate the structure and flowchart described herein in a schematic way and are not necessarily drawn to scale, unless otherwise specified.

### BRIEF DESCRIPTION OF THE DRAWINGS

Detailed description of the particular embodiments will be given below with reference to accompanying drawings, from which the invention will be more fully understood. Identical elements are denoted by identical reference signs throughout the drawings, wherein:
Fig. 1 is a schematic structural view of the scooter according to the invention;
Fig. 2 is a schematic structural view of the steering device of scooter according to the invention;
Fig. 3 is an exploded view of the steering device of scooter according to the invention, in particular, an exploded view of the rotating pair portion; and
Fig. 4 is a rear view of the steering device of scooter according to the invention.

### DETAILED DESCRIPTION OF THE INVENTION

The particular embodiments of the invention will be described hereinafter in detail with reference to the accompanying drawings in order that those skilled in the art will precisely understand the subject matter for which protection is sought by the invention.

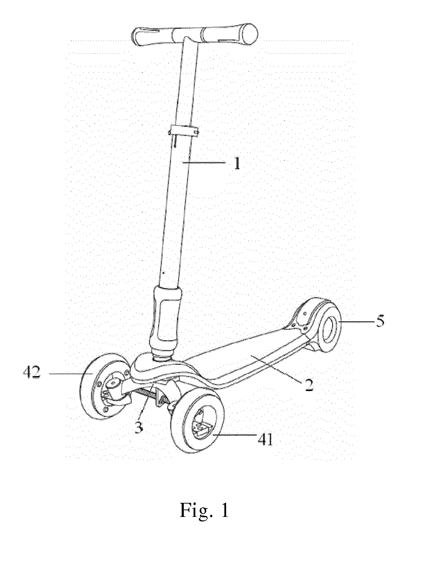

Reference is now made to Fig. 1, which is a schematic structural view of the scooter according to the invention. The scooter comprises a handlebar 1 used for being hold by the user, a deck 2 on which the user stands, two front wheels 41, 42 and a rear wheel 5. A front end of the deck 2 is connected to the two front wheels 41, 42 via a steering device 3, a rear end of the deck 2 is connected to the rear wheel 5, and the handlebar 1 passes through the deck 2 to be connected to the steering device 3 directly.

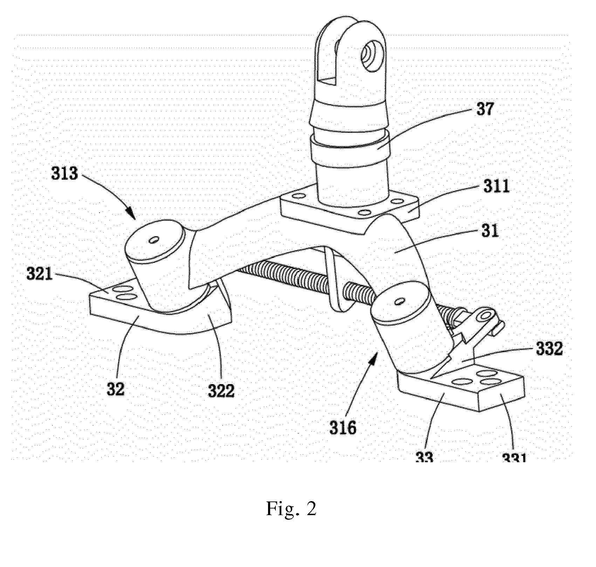

Reference is now made to Fig. 2, which is a schematic structural view of the steering device 3 of scooter according to the invention. The steering device 3 comprises a steering beam structure 31, a first wheel portion connector 32 and a second wheel portion connector 33, wherein the steering beam structure 31 comprises a load bearing portion at a central portion, a first beam 312 and a second beam 315 that are located on two sides of the load bearing portion respectively and extend in a transverse direction that is perpendicular to a traveling direction of the scooter. The load bearing portion comprises a base portion 311 that is fixed to the deck 2 of the scooter. The base portion 311 is further provided with a main lever main body structure 37 for connecting with the handlebar 1. Preferably, as shown in Fig. 2, the base portion 311 is riveted and fixed to the deck 2 through riveting holes A. The first beam 312 and second beam 315 extending in the transverse direction can be inclined relative to the ground at an angle respectively. Due to the fixed connection between the load bearing portion and the deck 2, the load bearing portion can bear the steering force from the scooter, which can be generated by the handlebar 1, a handle, or two sides of the deck. In the case where the steering force is generated by the deck 2, the inclining of the deck 2 in the transverse direction can generate the steering force, which is then transmitted by the load bearing portion to the first beam 312, the first wheel portion connector 32 or the second beam 315, the second wheel portion connector 33, and eventually to the two front wheels 41, 42, thus realizing steering of the front wheels 41, 42.

The first beam 312 has a first end 313, and the second beam 315 has a second end 316; the first end 313 forms a rotating pair with the first wheel portion connector 32, and the second end 316 forms a rotating pair with the second wheel portion connector 33. In the present embodiment, each of the rotating pairs comprises a sleeve 314, 317 and a steering shaft 323, 333 that can be rotated relative to each other, wherein the sleeve 314, 317 is selectively provided at one of the wheel portion connector 32, 33 and the end 313, 316 of the beam 312, 315 that corresponds to the wheel portion connector 32, 33, and the steering shaft 323, 333 is provided at the other one of the wheel portion connector 32, 33 and an end 313, 316 of the beam 312, 315 that corresponds to the wheel portion connector 32, 33. Specifically, the sleeves 314, 317 can be provided at the first end 313 and the second end 316, whereas the steering shaft 323, 333 can be provided at the first wheel portion connector 32 and the second wheel portion connector 33. Of course, those skilled in the art will understand that the connection relationship between the first end 313 and the first wheel portion connector 32 and that between the second end 316 and the second wheel portion connector 33 can be achieved in other embodiments. Since the first wheel portion connector 32 and the second wheel portion connector 33 move in association with each other, the rotation of the first wheel portion connector 32 and the second wheel portion connector 33 enables the front wheels 41, 42 connected to individual wheel portion connectors 32, 33 to be steered simultaneously.

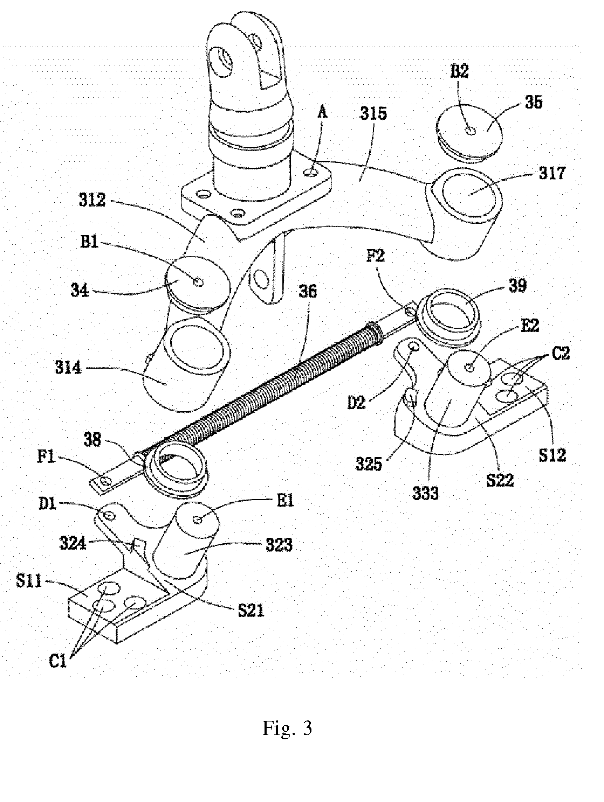

Reference is now made to Fig. 3, which is an exploded view of the steering device 3 of scooter according to the invention, in particular, an exploded view of the rotating pair portion. As can be seen, the first end 313 and the second end 316 are both in the form of a sleeve. Each of the first wheel portion connector 32 and the second wheel portion connector 33 comprises a body 321, 331 for connecting with front wheels 41, 42 of the scooter and a connection portion 322, 332 for connecting with the rotating pair. The body 321, 331 is provided with a plurality of riveting holes C1, C2 for connecting with the front wheels 41, 42 (the effect of connecting the wheel connection portion 322 with the front wheel 41 can be seen from Fig. 1), the connection portion 322, 332 is fixed with the steering shaft 323, 333 which can be rotated relatively inside the sleeve 314, 317. The body 321, 331 of the wheel portion connector 32, 33 comprises a first surface S11, S12 that is substantially parallel to the ground, the connection portion 322, 332 of the wheel portion connector 32, 33 comprises a second surface S21, S22 that is inclined relative to the first surface S11, S12 at an angle in a longitudinal direction, and the steering shaft 323, 333 projects outwardly from the second surface S21, S22. In addition, in the present embodiment, the steering shaft 323, 333 is connected and installed to the sleeve 314, 317 on the first end 313 and second end 316 of the steering beam 312, 315 from bottom to top. Those skilled in the art will understand that in addition to the above-described, there are also other ways for realizing a connection and installation of the steering shaft to the sleeve; for example, the steering shaft can be installed to the sleeve from top to bottom. In order to lubrication of the steering shaft during steering, a steering shaft washer 38, 39 that is of a flange shape can be firstly sleeved over the steering shaft 323, 333on the second surface S21, S22, then the sleeve 314, 317 is additionally sleeved over the steering shaft washer 38, 39, and a sleeve cover 34, 35 is additionally installed at the other end of the sleeve 314, 317, wherein the sleeve cover 34, 35 is provided with riveting holes B1, B2. Correspondingly, the steering shaft 323, 333 is also provided with riveting holes E1, E2. Therefore, the sleeve cover 34, 35 is fixed to the steering shaft 323, 333.

A front end of the connection portion 322, 332 is also provided with a riveting hole D1, D2, where a lateral rod 36 is installed. The lateral rod 36 is a spring element which is also provided with corresponding riveting holes F1, F2. The connection portion 322 of the first wheel portion connector 32 is connected with the connection portion 332 of the second wheel portion connector 33 via this lateral rod 36 so that the first wheel portion connector 32 and the second wheel portion connector 33 move in association with each other. For example, when the steering shaft 323 of the first wheel portion connector 32 is rotated relative to the sleeve 314 on the first end 313 of the first beam 312 of the steering beam structure 31, the second wheel portion connector 33 will also be driven to rotate, and the steering shaft 333 will be rotated relative to the sleeve 317 on the second end 316 of the second beam 315.

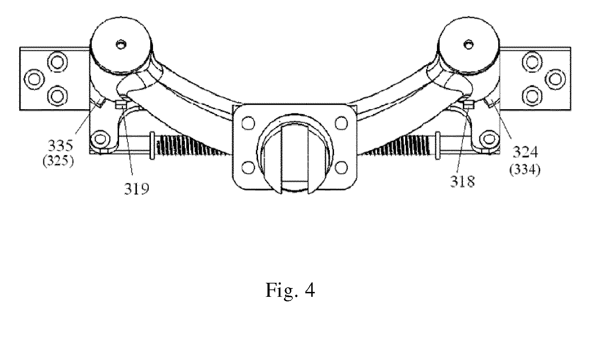

Reference is now made to Fig. 4, which is a rear view of the steering device 3 of scooter according to the invention. In order to improve a manipulation of steering of the scooter, the rotating angle of the steering shafts 323, 333 can be limited at a certain range. Such a design can be seen from the rear view of Fig. 4. As can be seen, the sleeves 314, 317 are provided with projections 318, 319, and the second surfaces S21, S22 are provided with first bosses 324, 325 (not shown) and second bosses 334 (not shown), 335. Specifically, a limiting groove in the second surfaces S21, S22 is formed between the first bosses 324, 325 and the second bosses 334, 335. When the steering shafts 323, 333 are rotated relative to the sleeves 314, 317, the projections 318, 319 can move to a limit position of the second bosses 334, 335 from a limit position of the first bosses 324, 325. In an embodiment in which the rotating pair comprises the steering shaft washers 38, 39, the steering shaft washers 38, 39 can be provided with a groove left for the space of the projections 318, 319.

When a user rides the scooter, he/she performs steering by tilting the deck 2 under his/her foot. During traveling, when the deck 2 is tilted leftward relative to the user, the steering force (or steering torque) is transmitted by the load bearing portion to the sleeve 314 on the first end 313 via the first beam 312. The relative rotation between the steering shaft 323 and the sleeve 314 can make the first wheel portion connector 32 deviate, and further drives the second wheel portion connector 33 to deviate in the same manner, thus realizing the steering of two front wheels 41, 42. Likewise, when the deck 2 is tilted rightward relative to the user, the steering force (or steering torque) is transmitted by the load bearing portion to the sleeve 317 on the second end 316 via the second beam 315. The relative rotation between the steering shaft 333 and the sleeve 317 can make the second wheel portion connector 33 deviate, and further drives the first wheel portion connector 32 to deviate in the same manner, thus realizing the steering of two front wheels 41, 42 in the opposite direction.

The above described particular embodiments merely serve to illustrate the invention, rather than liming the invention. Those skilled in the art can make various modifications and variations to the invention without departing from the scope of the invention. Therefore, all the equivalent technical solutions will also fall within the scope of the invention, which should be defined the appended claims.

## Claims

1. A steering device of scooter, **characterized by** comprising:
a steering beam structure (31), a first wheel portion connector (32) and a second wheel portion connector (33), wherein the steering beam structure (31) comprises a load bearing portion, a first beam (312) and a second beam (315) that are located on two sides of the load bearing portion respectively and extend in a transverse direction that is perpendicular to a traveling direction of the scooter, the load bearing portion bears a steering force from the scooter, the first beam (312) has a first end (313), and the second beam (315) has a second end (316); the first end (313) forms a rotating pair with the first wheel portion connector (32), and the second end (316) forms a rotating pair with the second wheel portion connector (33), the first wheel portion connector (32) and the second wheel portion connector (33) are connected to be moved in association with each other, and the rotation of first wheel portion connector (32) and the second wheel portion connector (33) enables the wheels of scooter that are fixed to individual wheel portion connectors (32, 33) to steer.

2. The steering device of scooter according to claim 1, **characterized in that** the load bearing portion comprises a base portion (311) that is fixed to the deck (2) of the scooter, and the base portion (311) is further provided with a main lever main body structure (37) for connecting with a handlebar (1) of the scooter.

3. The steering device of scooter according to claim 1, **characterized in that** each of the rotating pairs comprises a sleeve (314, 317) and a steering shaft (323, 333) that can be rotated relative to each other, wherein the sleeve (314, 317) is selectively provided at one of the wheel portion connector (32, 33) and the end (313, 316) of the beam (312, 315) that corresponds to the wheel portion connector (32, 33), and the steering shaft (323, 333) is provided at the other one of the wheel portion connector (32, 33) and the end (313, 316) of the beam (312, 315) that corresponds to the wheel portion connector (32, 33).

4. The steering device of scooter according to claim 3, **characterized in that** each of the first wheel portion connector (32) and the second wheel portion connector (33) comprises a body (321, 331) for connecting with the wheel of the scooter and a connection portion (322, 332) for connecting with the rotating pair.

5. The steering device of scooter according to claim 4, **characterized in that** the steering shaft (323, 333) is fixed to the connection portion (322, 332), and the sleeve (314, 317) is fixed to the end (313, 316) of the beam (312, 315), wherein the steering shaft (323, 333) can rotate relatively in the sleeve (314, 317).

6. The steering device of scooter according to claim 5, **characterized in that** the body (321, 331) comprises a first surface (S11, S12) that is substantially parallel to the ground, the connection portion (322, 332) comprises a second surface (S21, S22) that is inclined relative to the first surface (S11, S12) at an angle in a longitudinal direction, and the steering shaft (323, 333) projects outwardly from the second surface (S21, S22).

7. The steering device of scooter according to claim 4, **characterized in that** the connection portion (322) of the first wheel portion connector (32) and the connection portion (332) of the second wheel portion connector (33) are connected through a spring-form lateral rod (36) so that the first wheel portion connector (32) and the second wheel portion connector (33) can move in association with each other.

8. The steering device of scooter according to claim 6, **characterized in that** the sleeve (314, 317) is provided with a projection (318, 319), and the second surface (S21, S22) is provided with a first boss (324, 325) and a second boss (334, 335) respectively, wherein when the steering shaft (323, 333) is rotated relative to the sleeve (314, 317), the projection (318, 319) can move to the position of the second boss (334, 335) from the position of the first boss (324, 325).

9. The steering device of scooter according to claim 8, **characterized in that** a limiting groove in the second surface (S21, S22) is formed between the first boss (324, 325) and the second boss (334, 335).

10. The steering device of scooter according to claim 6, **characterized in that** the steering device of scooter further comprises a steering shaft washer (38, 39) which is sleeved over an end of the steering shaft (323, 333) which is adjacent to the second surface (S21, S22), and the sleeve (314, 317) is sleeved over the steering shaft washer (38, 39).

11. The steering device of scooter according to claim 1, **characterized in that** the first beam (312) and the second beam (315) extending in the transverse direction are inclined relative to the ground at an angle respectively.

12. A scooter **characterized by** comprising a handlebar (1), a deck (2), front wheels (41, 42) and a rear wheel (5), wherein a front end of the deck (2) is connected to the front wheels (41, 42) via the steering device (3) of scooter according to any one of claims 1-11, a rear end of the deck (2) is connected to the rear wheel (5), and the steering device (3) is further connected to the handlebar (1).
